# EUROPEAN PATENT SPECIFICATION

(11) **EP 0 831 711 B1**
(45) Date of publication and mention of the grant of the patent: **22.12.1999**
(21) Application number: 96916165.2
(22) Date of filing: 29.05.1996
(51) Int. Cl.: A23D 7/00

(54) **EDIBLE PLASTIC SPREAD**
ESSBARER PLASTISCHER AUFSTRICH
PRODUIT COMESTIBLE MALLEABLE A TARTINER

(30) Priority: 07.06.1995 EP 95201493; 01.08.1995 EP 95202095
(43) Date of publication of application: 01.04.1998
(73) Proprietor: UNILEVER N.V., 3013 AL Rotterdam (NL); UNILEVER PLC, London EC4P 4BQ (GB)
(72) Inventor: SASSEN, Cornelis, Laurentius, NL-3123 CN Schiedam (NL); DE JONG, Jeroen, P., J., Essex RM16 1SD (GB); DE VRIES, Isabel, NL-3137 RL Vlaardingen (NL); VAN MEETEREN, Johanna, Antonia, NL-3137 TB Vlaardingen (NL)
(74) Representative: Sikken, Antonius H. J. M.
(86) International application number: EP9602294
(87) International publication number: WO9639855

(56) References cited:
- EP-A- 0 041 299
- EP-A- 0 130 642
- EP-A- 0 470 658
- WO-A-89/07893
- WO-A-95/06414
- FR-A- 2 660 160
- FETTE, SEIFEN, ANSTRICHMITTEL, vol. 88, no. 7, HAMBURG DE, pages 250-258, XP000578217 K.G. BERGER: "Palm oil products -Why and how to use them"
- DATABASE WPI Week 9041 Derwent Publications Ltd., London, GB; AN 90-309484 XP002012664 & JP,A,02 219 581 (AJINOMOTO KK) , 3 September 1990
- JOURNAL OF THE AMERICAN OIL CHEMISTS' SOCIETY, vol. 70, no. 4, CHAMPAIGN US, pages 431-433, XP000360806 L. DEMAN ET AL.: "Polymorphic stability of hydrogenated palm oleins in dilutions with unhydrogenated liquid oils"
- LIPID TECHNOLOGY, vol. 5, no. 2, 1993, OXFORD, UK, pages 37-40, XP002012663 K. BERGER: "Food product formulation to minimize the content of hydrogenated fats"
- DATABASE WPI Week 7546 Derwent Publications Ltd., London, GB; AN 75-76490W XP002012665 & JP,A,50 086 505 (ASAHI ELECTROCHEM IND KK) , 11 July 1975
- JOURNAL OF THE SCIENCE OF FOOD AND AGRICULTURE, vol. 46, no. 4, BARKING GB, pages 481-493, XP000025135 NOR AINI IDRIS ET AL.: "Evaluation of shortenings based on various palm oil products"

## Description

The invention relates to an edible plastic spread having a continuous fatphase and optionally an aqueous phase. Examples of such spreads are margarine, butter, halvarine or minarine, so-called 20% fat spreads and the like.

For spreads other than butter typically a fat is employed that comprises liquid oil and structuring fat or hardstock. The hardstock typically consists of a rather complex mixture of triglycerides obtained by blending components from different origins, e.g. originating from different plant types, and usually at least some of these components have been subjected to chemical modification, i.e. partial hydrogenation and/or interesterification.

Recently, some customers have developed a preference for products that are substantially free from trans fatty acids i.e. that have not been subjected to partial hydrogenation, or that contain only little partially hydrogenated fat.

To meet this need we have studied ways to prepare such spreads using as component in the hardstock, fat derived from palm oil, e.g. palm oil as such, palm stearine fractions and mixtures thereof.

Whereas initially trials seemed to give promising results, upon storage of the product at e.g. 5°C as is often applied for such spreads, after 1 or 2 weeks we observed the development of a very strange product defect. Particles began to develop in the product and they grew to a size as big as 2-3 mm or even bigger. When taking such particles out of the product e.g. with a little pin, and gently rubbing them between the fingers they would quickly melt.

This defect is quite different from the well known product defects of sandiness and graininess. In the case of sandiness the particles have higher melting points, they do not melt so readily when rubbing them between the fingers. The well known graininess consists of particles which also melt at relatively low temperature but the particle sizes are much smaller.

A defect as the present one we had not observed before. We called it "tropical graininess". We have studied this problem. We have investigated the nature of these particles and found them to consist of fat, in particular of agglomerates of fat crystals. We have also found a way to substantially prevent the development of this defect.

Accordingly, the invention provides an edible plastic spread consisting of a continuous fatphase and optionally an aqueous phase wherein the fat of the fatphase:
* includes at most 5% preferably 0 - 3% trans unsaturated fatty acid residue,
* consists of 40 - 90%, preferably 50 - 85 % of liquid oil and 60 - 10%, preferably 50 - 15% of structuring fat which structuring fat
   - comprises chemically unmodified palm oil or one or more palm oil fractions or a combination of 2 or more thereof, and
   - includes hydrogenated and/or interesterified fat and/or animal fat such that the amount of interesterified fat is at most 70% of the structuring fat,
* contains
   - at most X % symmetrical POP triglycerides or
   - more than X % symmetrical POP triglycerides and contains asymmetrical PPO triglycerides such that P2O ≤ 16-4(POP/PPO)
      wherein P indicates palmitic acid residues, O indicates oleic acid residues, P2O indicates the sum of POP and PPO triglycerides and X = 3.5, and
* has an N20 ≥ 4.5, preferably N20 ≥ 5.0.

Preferred embodiments of the spread are given in claims 2 - 7.

We found that the occurrence of the tropical graininess depends on the amount of symmetrical POP triglycerides in the fat used in the continuous fat phase. By ensuring that the amount of POP triglycerides is not more than 3.5%, preferably not more than 3.0%, especially not more than 2.5% the risk of such tropical graininess developing becomes practically negligible.

On the other hand, we found that, within certain limits, higher amounts of POP triglycerides may be present in the fat, but in that case asymmetrical PPO triglycerides should be present as well. In that case the combined amount of POP and PPO, indicated as P2O, should be equal to or less than 16-4(POP/PPO), preferably 15-4(POP/PPO), more preferably equal to or less than 14-4(POP/PPO).

As used herein, the expression palm oil refers to chemically un-modified palm oil, i.e. palm oil that has not been subjected to hydrogenation or interesterification, except where indicated otherwise.

For use in the structural fat preferably palm oil and/or palm oil stearine are used. Compared with palm oil midfraction and palm oil oleine, palm oil and especially palm oil stearine provide the best structural contribution to spreads in relation to their content of POP. The amount of POP in palm oil and fractions thereof can fluctuate substantially depending on the origin and the way the fractionation is carried out, but typical POP contents are:

| | |
|---|---|
| palm oil | 24 % POP |
| dry fractionated palm oil stearine | 22 % POP |
| dry fractionated palm oil oleine | 20 % POP |
| wet fractionated palm oil midfraction | 60 % POP. |

With the use of e.g. 15% palm oil stearine as the structuring fat in the fatblend to be used, the balance of the fatblend consisting of liquid oil, spreads might perhaps be made. However, such spreads would be very soft and vulnerable to oil exudation and other defects. Therefore, the structuring fat should comprise a component in addition to the palm oil and/or palm oil fractions. This additional component should be fat of animal origin or fat that has been chemically modified by means of interesterification and/or hydrogenation or a combination thereof. If fat of animal origin is used, it can be used without modification or it can be fractionated, hydrogenated and/or interesterified.

Examples of fats that can suitably be used as structuring fat in combination with the palm oil and/or palm oil fractions, are:
* randomly interesterified palm oil or palm oil stearine
* enzymatically interesterified mixtures of lauric fat and palm oil and/or palm oil stearine
* partially hydrogenated palm or palm oil oleine.
* butter fat or butter fat stearine
* partially hydrogenated tallow oleine.

When composing the structuring fat care should be taken that the above given requirements for the amount of POP and in case of higher amounts of POP, also for the amount of PPO depending on the POP content, are observed. Care should also be taken that the trans content of the product does not exceed 5%, preferably 3% and that the amount of interesterified fat in the structuring fat does not exceed 70%. Preferably the amount of interesterified fat does not exceed 50% of the structuring fat. The amount of trans fatty acid residues in the fat can be assessed in conventional manner, preferably using GLC. The POP content of the fat can also be evaluated with conventional methods e.g. using GLC for the fatty acid analysis in combination with carbon number analysis together with general knowledge about the fats employed in case these are relatively simple in TG structure, and/or in combination with 2-position analysis using partial hydrolysis of the 1,3 positions of the triglycerides and the 1,3 random distribution assumption. Suitable methods are for example described in EP 78568 (FAME and Carbonnumber analysis), JAOCS 54, (1977), 208 (trans content), JAOCS (1991), 68(5), 289-293 (Silverphase HPLC), F.D. Gunstone et al, The Lipid Handbook, 2nd edition, (1994), Chapman & Hall, London, pages 338-340 (Silver nitrate TLC) and A.O.C.S. Official Method Ch 3-91, 1-4 (2-position analysis).

For example, a component suitable for inclusion in the structural fat is palm oil hydrogenated to a slip melting point of 42-45°C. In such components, the typical POP content ranges from 12-17%, the trans fatty acid content is usually less than 20%, while the components make good contributions to the structure of the products.

As another example, enzymatically interesterified mixtures of palmkernel oil and palm oil stearine, e.g. in 30-70/70-30 weight ratio, can make a good structural contribution while the POP content of such a component is much reduced compared with the corresponding physical mixture of palmkernel oil and palm oil stearine. However, such interesterified component should not be used at levels exceeding 70% of the structural fat, or else other crystallisation problems may arise.

We found that chemically unmodified lauric fat such as coconut oil, palmkernel oil or palmkernel stearine should not be used as the sole structuring fat component in addition to chemically unmodified palm oil or palm oil fraction. It may make the risk of tropical graininess developing in the spread larger. Such fat may however be included in the structuring fat as component additional to the palm oil and/or palm oil fraction(s) and the hydrogenated and/or interesterified fat and/or fat of animal origin.

Preferably the fat of the spread includes palm oil and/or palm oil stearine in a combined amount of 3-17%, more preferably 5-14%, while the fat is substantially free from other fractions of palm oil. The amount of hydrogenated and/or interesterified fat and/or animal fat in the structuring fat preferably is 3-35%, more preferably 5-30%, calculated on the total fatblend used in the spread. The combined amount of these 2 parts of the structuring fat preferably is 10-50%, especially 15-40% calculated on the weight of the fat. Other structuring fat, e.g. palm kernel oil or coconut oil is preferably not present in the fat at an amount exceeding 15%, more preferably its amount does not exceed 10% of the fat.

In order to be able to obtain a spread that is sufficiently robust, e.g. that can withstand being kept at the breakfast table at ambient temperature for some time, preferably the fat is such that it has a solid fat content at 20°C as measured by NMR in a conventional manner (See e.g. Fette, Seifen, Austrichmittel, 80, (1978), 180-186) following heating to 60°C, 1 hour stabilisation at 0°C and 30 minutes stabilisation at 20°C (the measuring temperature), of at least 5. Specifically it is preferred for N20 to be 6-20 particularly 7-15.

The liquid oil can be any edible oil liquid at ambient temperature e.g. soyabean oil, rapeseed oil, sunflower oil and the like and mixtures of 2 or more of such oils. The POP content of such oils is well below 1%. However, cottonseed oil may contain as much as 3% POP. Therefore, cottonseed oil is preferably not used as liquid oil, or only in small amounts in the fatblend. Liquid oil typically does not contain solid fat at 20°C, preferably it is oil that does not contain solid fat at 15°C. Because the liquid oil does not contribute to the solid fat content at 20°C, the type and amount of structuring fat should be chosen, within the above given constraints, such that the blend of structuring fat and liquid oil has a N20 value of at least 4.5, preferably of at least 5.0.

The invention only applies to spreads the fat of which contains at least 40% liquid oil, preferably at least 50% of liquid oil. We found it quite remarkable that tropical graininess was not observed even at quite high contents of POP, if the liquid oil content was less than 40%. At an oil content between 40 and 50% the defect was observed occasionally but not often. At contents of liquid oil above 50%, the occurrence of tropical graininess in spreads containing chemically unmodified palm oil in the structuring fat was a substantial problem unless the above specified limits for POP or for POP in combination with PPO were observed.

We found that in particular good spreads could be obtained having a low trans unsaturated fatty acid content and containing palm oil and/or palm oil fraction in the structuring fat, if the overall composition was chosen such that the POP content was 1-3.5%.

Plastic spread does not need to contain an aqueous phase, but preferably the spread comprises 20-85%, more preferably 35-85%, especially 60-83% continuous fatphase, the balance consisting of dispersed aqueous phase.

The fatphase may comprise, apart from fat other ingredients such as emulsifiers, colorants, flavours, vitamins etc. The aqueous phase, if present, may contain water, ingredients derived from milk, food grade acid, preservative, flavour etc.

Whether tropical graininess develops in a spread does not depend solely on the fat composition. For example, a spread containing as fat a blend of 25% palm oil stearine and 75% sunflower oil does not always develop tropical graininess. The risk of this occurring is influenced by processing and storage conditions. For example, if the consumer leaves the product repeatedly at the breakfast table for several hours at temperatures of 20-25°C and then puts the product back in the refrigerator at 5°C, this strongly increases the risk of the defect developing. Near the limits of the above given requirements the risk of the defect developing is low but the problem may still occur if the product is subjected to very demanding storage conditions. Especially with such borderline compositions, we found that the risk can be reduced by choosing certain processing conditions.

The invention encompasses a process for preparing the present spread wherein the composition that is to constitute the spread is subjected to cooling and working to cause crystallisation of fat such that the temperature of the composition immediately after the cooling and working treatment is at most 10°C.

Conventionally when preparing such products, the temperature of the composition subsequent to the cooling and working treatment and prior to packing is typically 12-17°C. The product is then fed to the packing line to be packed and then stored in a cold store at e.g. 5-10°C. We found that to prevent the tropical graininess from developing when using this kind of fat blend the temperature immediately after the cooling and working treatment, of the composition ready to be packed should preferably be at most 10°C, more preferably 0-8°C, especially 2-6°C.

The cooling and working treatment can conveniently be effected using conventional spread manufacturing equipment. Preferably the treatment is carried out in one or more scraped surface heat exchangers, e.g. Votator® A-units, optionally combined with 1 or more stirred crystallizers, e.g. Votator C-units. At the end a resting tube, e.g. a Votator B-unit may be employed, but preferably the last unit of the equipment employed to impart the cooling and working is a stirred crystallizer. A suitable unit sequence is for example first one or more A-units, followed by a C-unit or possibly a B-unit.

Appropriately, the composition that is to constitute the product is prepared such that the fat contained in it is substantially free from crystallised fat before the start of the cooling and working treatment, e.g. by ensuring that the temperature is sufficiently high. The cooling and working is then effected such that the temperature of the composition immediately following this treatment is sufficiently low, i.e. at most 10°C, preferably 0-8°C, more preferably 2-6°C. This can be achieved by adjusting throughput, chilling on the cooling units and stirring speed in the crystallisers. Following this treatment the product is ready to be packed. To pass the composition to and through the packing machine it will in practice be unavoidable that it is subjected to some working, e.g. caused by pumps, passage through pipes etc. However such treatment is only intended to achieve a smooth packing operation and is quite different from the cooling and working treatment to cause crystallisation of fat to occur, which is applied deliberately and designed to obtain a product with a plastic texture, which gives it its spreadable character. The critical temperature is the one the composition has immediately after this deliberate cooling and working treatment, prior to passage to the packing line.

Throughout this specification, all percentages, parts and proportions are by weight, unless indicated otherwise.

### Example 1 and comparative examples A-C

A fatblend is prepared from the following components
- 10 %: palm oil hydrogenated to a slip melting point of 45 °C
- 10 %: palm oil stearine (dry fractionated)
- 8 %: palmkernel stearine (dry fractionated)
- 72 %: low erucic acid rapeseed oil

The fatblend contains about 3.5% POP. Its content of trans unsaturated fatty acid residues is about 2%.

A fat phase composition is prepared by mixing 99.7 parts of fatblend with 0.2 parts of lecithin, 0.1 part of monodiglyceride and small amounts of β-carotene solution and flavour.

An aqueous phase composition is prepared from 5 parts buttermilkpowder, 1 part salt, small amounts of flavour, 94 part water and citric acid to obtain a pH of 4.3.

80 parts of fat phase composition and 20 parts of aqueous phase composition are combined and processed in a conventional manner using a Votator, to obtain a spread which is packed in tubs. The product is stored at 5 °C. After 3 weeks storage, the product is substantially the same as 1 day after production. No tropical grains have developed in the product.

For comparison, margarines were made using the following fatblends:
A
   - 25 %: dryfractionated palm oil stearine
   - 75 %: sunflower oil
B
   - 23 %: palm oil
   - 8 %: palm oil hydrogenated to a slip melting point of 45 °C
   - 4 %: cottonseed oil hydrogenated to a slip melting point of 36 °C
   - 3 %: palmkernel oil
   - 62 %: cottonseed oil
C
   - 20 %: palm oil
   - 18 %: palm oil hydrogenated to a slip melting point of 42 °C
   - 8 %: palm kernel oil
   - 54 %: of a mixture of rapeseed oil, soyabean oil and sunflower oil

The POP contents of the blend were about 5.2%, 8.1% and 7.8% for blends A, B and C respectively. The PPO contents of the 3 blends were 1.4, 1.6 and 1.9% respectively. Thus none of these 3 blends met the requirement of P2O ≤ 16-4(POP/PPO) (see table 1 below). All 3 blends contained about 3% or less trans unsaturated fatty acid residues. After 3 weeks storage of the margarines at 5 °C, in all 3 products substantial amounts of grains with a size as big as 1 - 3 mm, reflecting tropical graininess, had developed.

**Table 1**

| | POP | PPO | P2O | 16-4(POP/PPO) |
|---|---|---|---|---|
| Example 1 | 3.5 | 1.0 | 4.5 | 2.0 |
| Comp.A | 5.2 | 1.4 | 6.6 | 1.1 |
| Comp.B | 8.1 | 1.6 | 9.7 | -4.2 |
| Comp.C | 7.8 | 1.9 | 9.7 | -0.4 |

### Comparative examples D and E

Two shortening spreads, consisting of fat only, were prepared to investigate the similarity or difference with respect to tropical graininess development of POP and SOS wherein S indicates stearic acid residues.

The fat compositions used and the amount of the most relevant triglycerides of the two products are given in table 2.

**Table 2**

| Comparative example | D | E |
|---|---|---|
| Fat composition | | |
| Sheastearin | 12.2 | - |
| Palm midfraction (solvent) | - | 12.0 |
| Fully hardened palmstearin(dry) | 3.7 | 3.6 |
| Sunflower oil | 84.1 | 84.4 |

| Triglycerides * | | |
|---|---|---|
| POP | 0.0 | 6.8 |
| PPO | 0.0 | 0.7 |
| SOS | 8.6 | 0.1 |
| H3 | 4.0 | 4.1 |
| HOH | 9.6 | 8.5 |

| | | |
|---|---|---|
| * H indicates saturated fatty acid residues with 16 or more carbon atoms in the chain | | |

The shortening spreads were processed by passage through a scraped surface heat exchanger operated with 1500 scrapings per minute using a throughput of 4 kg/h. The exit temperature of the composition was 15 °C. The products were filled into tubs and stored at 5°C.

After 3 weeks storage, comparative example D had a normal smooth structure without grains. In sample E large grains had developed.

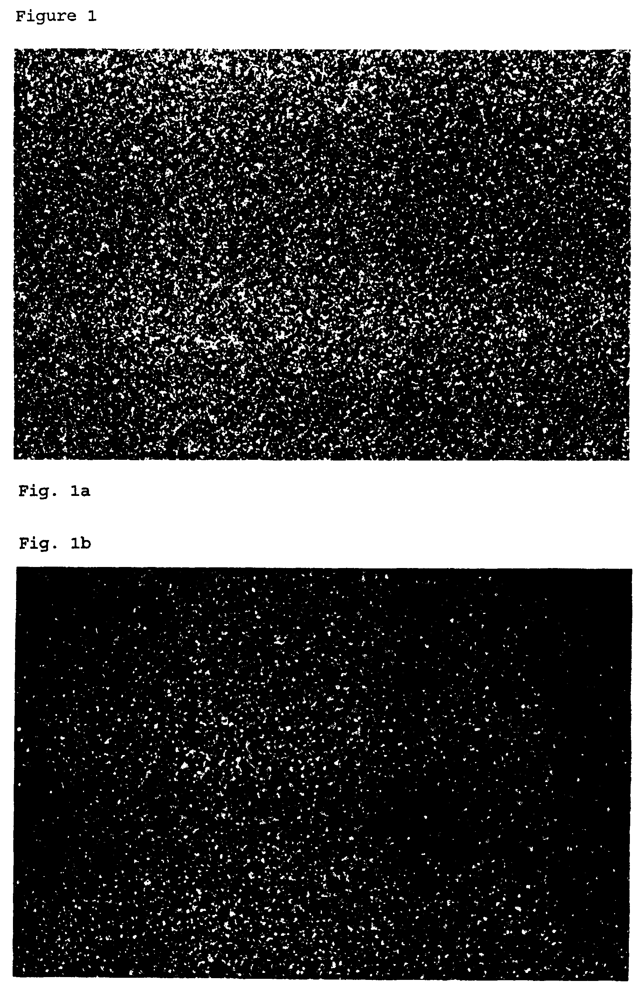

The attached figures 1-4 show light microscopy pictures of samples D and E. In each of the figures, the a-figure is a magnification such that the whole width of the picture corresponds to 2.55 mm of the sample. For each of the b-figures, the width of the picture corresponds to 4.8 mm of the sample.

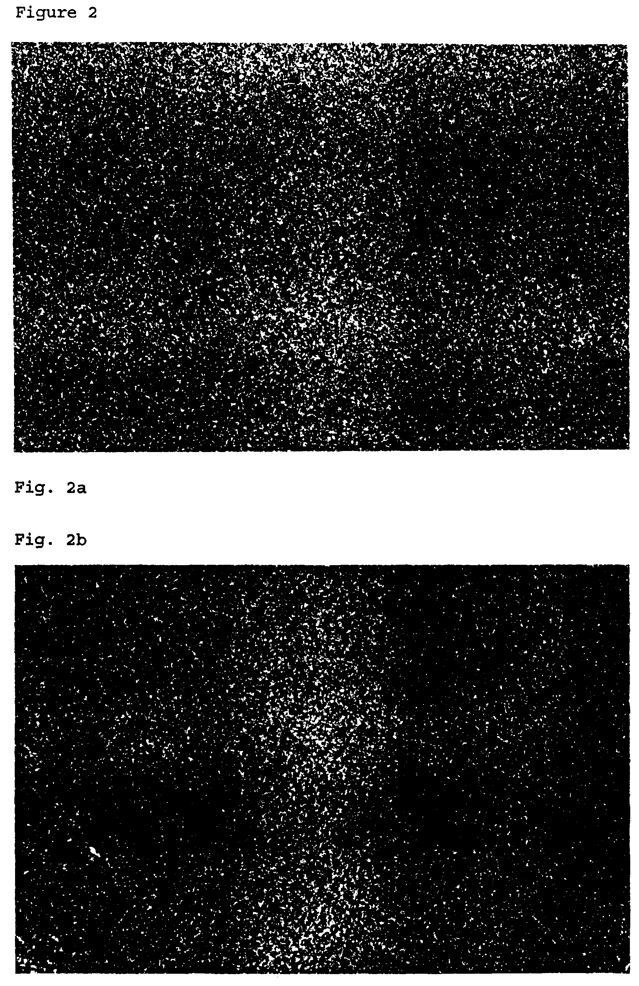

The pictures in figures 1 and 2 are from sample D, the sample thickness in figure 1 being 0.01 mm and in figure 2 being 0.1 mm. The structures are smooth and regular and show a normal fat crystal network of a regular plastic shortening spread consisting of fat only (the few larger black spots in fig. 2b are imperfections in sample preparation).

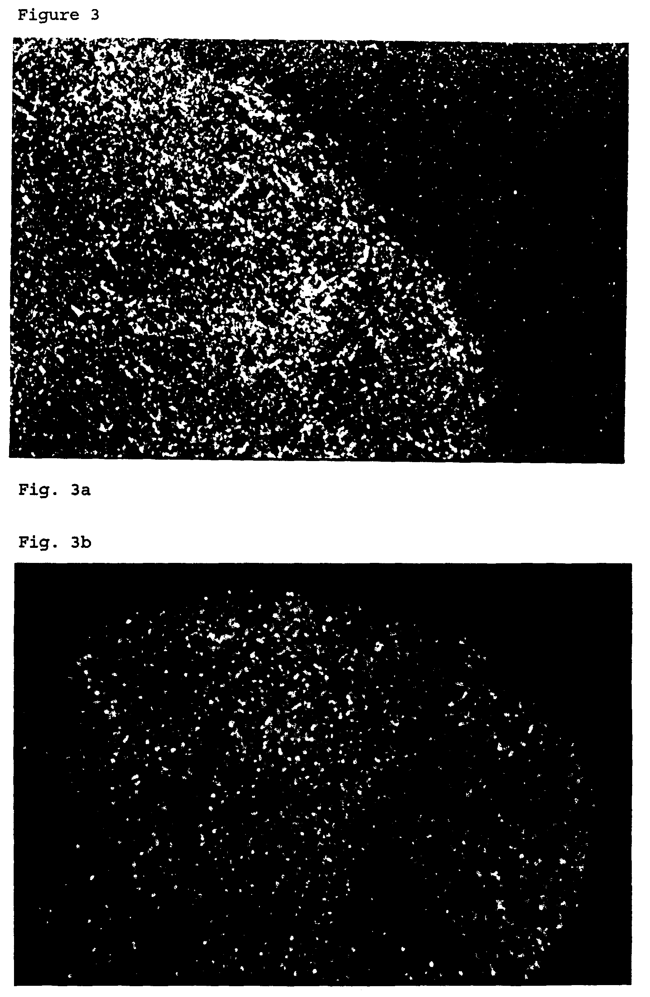

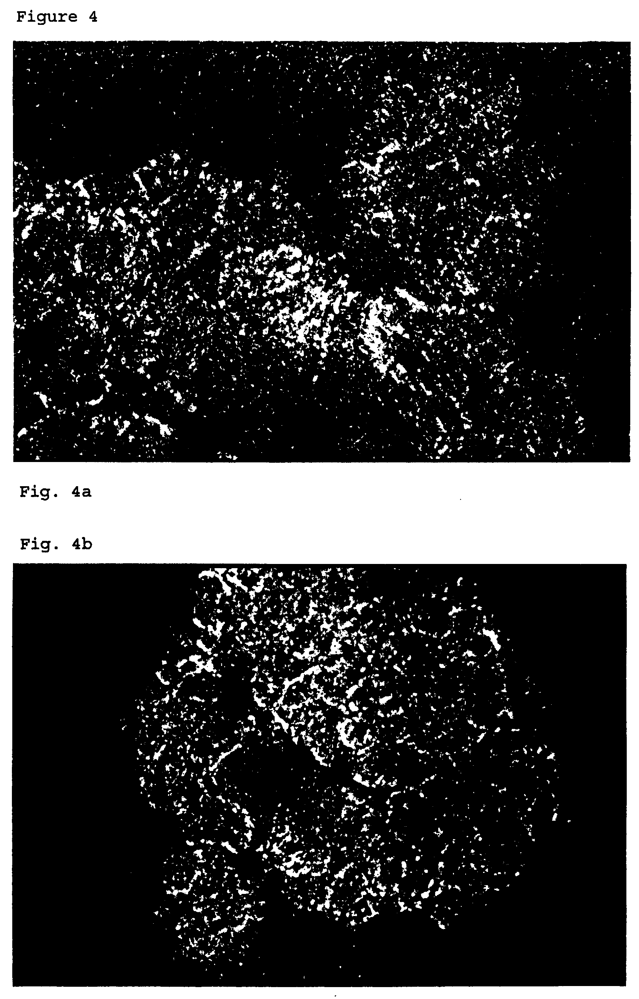

The pictures in figures 3 and 4 are from sample E, the sample thickness of figure 3 being 0.01 mm and that of figure 4 being 0.1 mm. The pictures show large irregularities in the structure, the grains. The grains in figure 3 are so large that a single whole grain cannot be shown on the picture. It should be kept in mind however that because of the small sample thickness required, the grains are flattened and therefore appear somewhat larger in the picture than they actually are. Typical grain diameter in sample E was about 2 mm.

These trials show that the tropical graininess defect is typical for POP. For the SOS triglyceride it was not observed.

### Examples 2-3 and comparative example F

Plastic shortening spreads consisting of fat only were prepared having a P2O content of about 10% and having different POP/PPO ratios.

The fat compositions employed, their N-values and the amounts of the relevant triglycerides in the compositions are shown in table 3. In the measurement of the N-values of these samples, 16 hours stabilisation at 0°C instead of 1 hour was applied.

**Table 3**

| Example | 2 | 3 | F |
|---|---|---|---|
| Fatcomposition(%) | | | |
| Chem. interesterified palm oil | 29.7 | 22.3 | 17.5 |
| Palm midfraction (solvent) | 4.2 | 6.9 | 7.7 |
| Palmstearine (dry) | - | - | 2.2 |
| Sunflower oil | 66.1 | 70.8 | 72.6 |

| Triglycerides | | | |
|---|---|---|---|
| POP | 4.8 | 5.7 | 6.3 |
| PPO | 5.0 | 4.0 | 3.4 |
| POP/PPO | 1.0 | 1.4 | 1.8 |
| P2O | 9.8 | 9.7 | 9.7 |
| 16-4(POP/PPO) | 12.2 | 10.3 | 8.6 |

| N-values | | | |
|---|---|---|---|
| N10 | 19.3 | 17.1 | 15.7 |
| N20 | 9.1 | 6.9 | 6.7 |
| N30 | 4.1 | 2.7 | 2.9 |
| N35 | 2.7 | 1.8 | 1.5 |

The samples were produced as described in example D. They were stored for 1 week at 5°C, then kept for 1 day at 25°C and then stored for 5 weeks at 5°C.

The samples of examples 2 and 3 had remained smooth, in those of comparative example F unacceptable grains had developed.

### Example 3 and comparative example G.

Plastic spreads were produced the fat of which had a P2O content of about 6% and that had a POP/PPO ratio of about 2 or of about 4.

The fat compositions employed, the relevant triglyceride contents and the N-values of the fatblends are shown in Table 4.

**Table 4**

| Example | 3 | G |
|---|---|---|
| Fatcomposition (%) | | |
| Palm oil | 10.0 | 14.7 |
| Chemically interesterified palm oil | 7.6 | - |
| Palmstearine (dry) | 5.2 | 7.1 |
| Sunflower oil | 77.2 | 78.2 |

| Triglycerides | | |
|---|---|---|
| POP | 4.0 | 4.9 |
| PPO | 2.0 | 1.1 |
| POP/PPO | 2.0 | 4.4 |
| P2O | 6.0 | 6.0 |
| 16-4(POP/PPO) | 8.0 | -1.8 |

| N-values | | |
|---|---|---|
| N10 | 8.9 | 6.3 |
| N20 | 4.7 | 3.9 |
| N30 | 2.2 | 2.2 |
| N35 | 1.9 | 1.2 |

In this case the POP and PPO contents of the fatblends were determined by assessing their contents in the individual components and then calculating the contents for the total blends.

For palm oil, the overall fatty acid composition and the fatty acid composition on the 2-position of the triglycerides were determined. From this, the fatty acid composition of the 1,3 positions was calculated. The PPO and POP contents were calculated from these data using the 1,3-position random distribution (see e.g. M.H. Coleman and W.C. Fulton, 5th Int. Conf. Biochem. Problems of Lipids, Pergamon Press, London (1961)) and 2-position random distribution approximations.

The PPO and POP contents of the chemically interesterified palm oil were calculated from the overall fatty acid composition on the basis of the overall random distribution of a chemically interesterified fat. (That the reaction had been complete had been monitored during the process on the basis of slip melting point and unstabilized N-value measurement).

For the palmstearine, AgNO3 thin layer chromatography was applied. The spots of the H¹3, H¹2O, H¹O2 + H¹2L, H¹OL + O3 and "other" (more highly unsaturated) triglyceride (TG) groups, wherein H¹ indicates saturated fatty acid residues and L indicates linoleic acid residues were recovered from the plate. To each of them saturated C17 methyl ester was added as internal standard. The fat was extracted from the material and converted to FAME and the fatty acid composition of each group was determined by gaschromatography. From these data also the amount of each of the TG groups in the palmstearin was calculated. The H¹2O group was further analysed in a corresponding manner for its 2-position fatty acid composition. Within this group the 1,3 random and the 2-random approximations were employed to calculate the POP and PPO contents.

Sunflower oil could be analysed for POP and PPO contents in the same way as described above for palm oil, but from the generally known properties of sunflower oil it can be concluded that the POP and PPO contents in this oil are negligable.

The results of these analyses were:

| % | POP | PPO |
|---|---|---|
| palm oil | 23.0 | 5.2 |
| chemically interesterified palm oil | 8.1 | 16.5 |
| palm stearine | 21.1 | 5.1 |
| sunflower oil | - | - |

The spreads were produced using the following composition
- 79.75 %: fatcomposition
- 0.08 %: monoglyceride
- 0.07 %: soybean lecithin
- 0.1 %: colourant
- 17.0 %: water
- 1.5 %: salt
- 1.5 %: wheypowder
- p.m.: lactic acid to pH 5.2

The spreads were produced using an AAC sequence. The temperature after the second A-unit was 5°C, that after the C-unit was 7°C. The A-units were operated at 800 rpm, the C-unit at 150 rpm. The residence time in the C-unit was about 40 seconds. The products were filled in tubs, stored at 5°C and evaluated after 3 months. The samples of example 3 remained smooth showing no problems. In the samples of comparative example G grains had developed in the product and the product was not acceptable.

Using these same compositions, spreads were also produced using less chilling on the A-units, such that the temperature after the second A-unit was about 11.5°C and the temperature after the C-unit about 13°C. With this processing, the samples of composition G developed still substantially more grains, while those of example 3 remained acceptable.

### Example 4 and comparative example H

Examples 3 and G were repeated except that in the fatblend 10% sunflower, calculated on total fatblend composition, was replaced with 10% of a chemically interesterified mixture of 60 parts fully hydrogenated palmkernel oil and 40 parts fully hydrogenated palm oil, to obtain example 4 and comparative example H, respectively.

The N-values of the fatblends were:

| Example | 4 | H |
|---|---|---|
| N10 | 19.4 | 17.8 |
| N20 | 10.8 | 10.0 |
| N30 | 4.6 | 4.4 |
| N35 | 2.0 | 1.6 |

Because the specific interesterified component introduced in these trials is fully saturated, while the POP and PPO contents of sunflower oil are negligable, the POP and PPO contents for the fatblends of examples 4 and H were the same as those for examples 3 and G, respectively.

For both processing conditions, the samples of example 4 remained good, while those of example H exhibited unacceptable tropical graininess.

The chemically interesterified fat incorporated in these trials is rich in H2M triglycerides wherein M indicates saturated fatty acids with 10-14 carbon atoms in the chain. Such H2M triglycerides have often been proposed in the literature as a remedy against various crystallisation defects, e.g. to prevent bloom in confectionery.

The trials of these examples indicate that H2M triglycerides can be present in the present products without adverse effect, but they are not effective as inhibitor to prevent the development of tropical graininess.

### Comparative examples I and J

These trials were designed to investigate the effect of the amount of liquid oil in the fatblend.

The fatcompositions used were:

| Example | I | J |
|---|---|---|
| Rapeseed oil (low erucic) | 33% | 53% |
| Palm oil | 30% | 20% |
| Palm kernel oil | 15.5% | 15% |
| interesterified mixture as used in example 4 | 21.5% | 12% |

Fatblend I had an N20 value of 22, an N30 of 8 and an N35 of 4. Fatblend J had an N10 value of 26, an N20 value of 13 and an N35 of 1.

The POP contents of fatblends I and J were about 7% and 5%, respectively. The PPO content was about 1 - 1.5% in both cases.

Using these fatblends, margarines with a fat content of 80% were produced in conventional manner. The products with fatblend I were packed in wrappers, those with fatblend J were packed in tubs.

Although the products with fatblend I had a very high POP content, grains were not found. In samples of the products with fatblend J, although their POP content was lower, tropical graininess did occur. These findings illustrate that if the liquid oil content became low, we did not observe tropical graininess, even if the POP content was high and the content of PPO was insufficient to be effective as inhibitor.

## Claims

1. Edible plastic spread consisting of a continuous fatphase and optionally an aqueous phase wherein the fat of the fatphase:
* includes at most 5% preferably 0 - 3% trans unsaturated fatty acid residue,
* consists of 40 - 90%, preferably 50 - 85 % of liquid oil and 60 - 10%, preferably 50 - 15% of structuring fat which structuring fat
- comprises chemically unmodified palm oil or one or more palm oil fractions or a combination of 2 or more thereof, and
- includes hydrogenated and/or interesterified fat and/or animal fat such that the amount of interesterified fat is at most 70% of the structuring fat,
* contains:
- at most X % symmetrical POP triglycerides or
- more than X % symmetrical POP triglycerides and contains asymmetrical PPO triglycerides such that P2O ≤ 16-4(POP/PPO)
wherein P indicates palmitic acid residues, O indicates oleic acid residues, P2O indicates the sum of POP and PPO triglycerides and X = 3.5, and
* has an N20 ≥ 4.5, preferably N20 ≥ 5.0.

2. Spread according to claim 1, wherein X=3.0 preferably X=2.5.

3. Spread according to claim 1 or claim 2 wherein the fat contains more than X% symmetrical POP triglycerides and contains asymmetrical PPO triglycerides such that P2O ≤ 15-4(POP/PPO), preferably P2O ≤ 14-4(POP/PPO).

4. Spread according to any one of claims 1 - 3 wherein the fat of the continuous fatphase contains 1 - 3.5 % of symmetrical POP triglycerides.

5. Spread according to any one of claims 1 -4 wherein the combined amount of palm oil and palm oil stearine is 3 - 17 %, preferably 5 - 14 % calculated on the weight of the fat while the fat is substantially free from other fractions of palm oil.

6. Spread according to any one of claims 1-5 wherein the structuring fat includes at most 50% interesterified fat.

7. Spread according to any one of claims 1-6 wherein the fat of the fatphase has an N20 value of 6-20, preferably 7-15.

8. Process for preparing a spread according to any one of claims 1 - 7 wherein the composition that is to constitute the spread is subjected to cooling and working to cause crystallisation of fat, such that the temperature of the composition immediately after the cooling and working treatment is at most 10°C, preferably 0-8°C, more preferably 2 - 6°C.

## Patentansprüche

1. Eßbarer plastischer Aufstrich, der aus einer kontinuierlichen Fettphase und fakultativ einer wäßrigen Phase besteht, worin das Fett der Fettphase :
* höchstens 5%, vorzugsweise 0 bis 3%, trans-ungesättigte Fettsäurereste einschließt,
* aus 40 bis 90%, vorzugsweise 50 bis 85%, flüssigem Öl und 60 bis 10%, vorzugsweise 50 bis 15%, strukturierendem Fett besteht, welches strukturierende Fett
- chemisch unmodifiziertes Palmöl oder eine oder mehrere Palmölfraktionen oder eine Kombination aus zwei oder mehreren davon umfaßt und
- hydriertes und/oder interesterifiziertes Fett und/oder tierisches Fett einschließt, so daß die Menge an interesterifiziertem Fett höchstens 70% des strukturierenden Fettes ausmacht,
* enthält:
- höchstens X% symmetrische POP-Triglyceride oder
- mehr als X% symmetrische POP-Triglyceride und asymmetrische PPO-Triglyceride enthält, so daß P2O ≤ 16-4(POP/PPO) ist, worin P Palmitinsäurereste bedeutet, O Ölsäurereste bedeutet, P2O die Summe aus POP- und PPO-Triglyceriden bedeutet und X = 3,5 ist, und
* einen N20 ≥ 4,5, vorzugsweise N20 ≥ 5,0 aufweist.

2. Aufstrich nach Anspruch 1, worin X = 3,0, vorzugsweise X = 2,5, ist.

3. Aufstrich nach Anspruch 1 oder 2, worin das Fett mehr als X% symmetrische POP-Triglyceride und asymmetrische PPO-Triglyceride enthält, so daß P2O ≤ 15-4(POP/PPO), vorzugsweise P2O ≤ 14-4(POP/PPO) ist.

4. Aufstrich nach irgendeinem der Ansprüche 1 bis 3, worin das Fett der kontinuierlichen Fettphase 1 bis 3,5% symmetrische POP-Triglyceride enthält.

5. Aufstrich nach irgendeinem der Ansprüche 1 bis 4, worin die kombinierte Menge aus Palmöl und Palmölstearin 3 bis 17%, vorzugsweise 5 bis 14%, berechnet auf das Gewicht des Fettes, beträgt, während das Fett im wesentlichen frei von anderen Fraktionen des Palmöls ist.

6. Aufstrich nach irgendeinem der Ansprüche 1 bis 5, worin das strukturierende Fett höchstens 50% interesterifiziertes Fett einschließt.

7. Aufstrich nach irgendeinem der Ansprüche 1 bis 6, worin das Fett der Fettphase einen N20-Wert von 6 bis 20, vorzugsweise 7 bis 15, hat.

8. Verfahren zur Herstellung eines Aufstriches nach irgendeinem der Ansprüche 1 bis 7, worin die den Aufstrich auszumachende Zusammensetzung einem Kühlen und Bearbeiten zur Bewirkung einer Kristallisation des Fettes unterworfen wird, so daß die Temperatur der Zusammensetzung unmittelbar nach der Kühl- und Bearbeitungsbehandlung höchstens 10°C, vorzugsweise 0 bis 8°C, insbesondere 2 bis 6°C, beträgt.

## Revendications

1. Produit à tartiner malléable comestible consistant en une phase grasse continue et, facultativement, une phase aqueuse, dans laquelle la graisse de la phase grasse :
* comporte au plus 5%, de préférence 0 à 3% de résidu d'acide gras insaturé trans,
* consiste en 40 à 90%, de préférence 50 à 85% d'huile liquide et 60 à 10%, de préférence 50 à 15% de graisse structurante, cette graisse structurante
- comprenant une huile de palme ou une ou plusieurs fractions d'huile de palme non modifiée chimiquement ou une combinaison de 2 ou plusieurs de celles-ci, et
- comportant une graisse hydrogénée et/ou interestérifiée et/ou une graisse animale de sorte que la quantité de graisse interestérifiée est au plus 70% de la graisse structurante,
* contient
- au plus X% de triglycérides POP symétriques ou
- plus de X% de triglycérides POP symétriques et contient des triglycérides PPO asymétriques tels que P2O est < ou égal à 16-4(POP/PPO),
P indiquant des résidus d'acide palmitique, 0 indiquant des résidus d'acide oléique, P20 indiquant la somme des triglycérides POP et PPO et X = 3,5, et
* a une N20 > ou égale à 4,5, de préférence à 5,0.

2. Produit à tartiner selon la revendication 1, dans lequel X = 3,0, de préférence X = 2,5.

3. Produit à tartiner selon la revendication 1 ou 2, dans lequel la graisse contient plus de X% de triglycérides symétriques POP et contient des triglycérides PPO asymétriques de sorte que P2O < ou égal à 15-4(POP/PPO), de préférence P2O < ou égal à 14-4(POP/PPO).

4. Produit à tartiner selon l'une quelconque des revendications 1 à 3, dans lequel la graisse de la phase grasse continue contient 1 à 3,5% de triglycérides POP symétriques.

5. Produit à tartiner selon l'une quelconque des revendications 1 à 4, dans lequel la quantité combinée d'huile de palme et de stéarine d'huile de palme est de 3 à 17%, de préférence 5 à 14% calculés par rapport au poids de graisse alors que la graisse est sensiblement exempte d'autres fractions d'huile de palme.

6. Produit à tartiner selon l'une quelconque des revendications 1 à 5, dans lequel la graisse structurante comporte au plus 50% de graisse interestérifiée.

7. Produit à tartiner selon l'une quelconque des revendications 1 à 6, dans lequel la graisse de la phase grasse a une valeur N20 de 6 à 20, de préférence 7 à 15.

8. Procédé de préparation d'un produit à tartiner selon l'une quelconque des revendications 1 à 7, dans lequel on soumet la composition qui doit constituer le produit à tartiner à un refroidissement et à un travail pour provoquer la cristallisation de la graisse, de sorte que la température de la composition immédiatement après le traitement de refroidissement et de travail est au plus de 10°C, de préférence 0 à 8°C, mieux 2 à 6°C.
